(19) Europäisches Patentamt
European Patent Office
Office européen des brevets

(11) EP 4 349 920 A1

(12) EUROPEAN PATENT APPLICATION
published in accordance with Art. 153(4) EPC

(43) Date of publication:
10.04.2024 Bulletin 2024/15

(21) Application number: 22815868.9

(22) Date of filing: 19.05.2022

(51) International Patent Classification (IPC):
C08L 101/00 (2006.01) C07F 9/145 (2006.01)
C08K 5/526 (2006.01) C08L 23/00 (2006.01)
C09K 15/32 (2006.01)

(52) Cooperative Patent Classification (CPC):
C07F 9/145; C08K 5/526; C08L 23/00;
C08L 101/00; C09K 15/32

(86) International application number:
PCT/JP2022/020831

(87) International publication number:
WO 2022/255116 (08.12.2022 Gazette 2022/49)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 31.05.2021 JP 2021091430

(71) Applicant: Sumitomo Chemical Company Limited
Tokyo 103-6020 (JP)

(72) Inventors:
- ASANO, Ayumi
Osaka-shi, Osaka 554-8558 (JP)
- MATSUOKA, Fumiaki
Osaka-shi, Osaka 554-8558 (JP)

(74) Representative: Vossius & Partner
Patentanwälte Rechtsanwälte mbB
Siebertstrasse 3
81675 München (DE)

# (54) PHOSPHITE ESTER COMPOSITION

(57) The present invention relates to a phosphite composition including a phosphite compound A0 represented by formula (1): and an oligomer A derived from the compound A0, wherein the oligomer A includes a structure represented by formula (2):, a number average molecular weight of the oligomer A is 2,000 to 30,000, and the phosphite composition has a content of the oligomer A of 1% or more.

R1
R2
R3
O
P
O
O
R1
R2
R3
R3
R2
R1

(1)





(Cont. next page)

(2)

**Description**

Technical Field

This patent application claims to priority under Paris Convention to Japanese Patent Application No. 2021-091430 (filing date: May 31, 2021), the entirety of which is incorporated herein by reference. The present invention relates to a phosphite composition, a stabilizer including the phosphite composition, a stabilizer composition including the stabilizer, and an organic material composition including a phosphite composition and an organic material.

Background Art

It is known that organic materials, such as thermoplastic resins, thermosetting resins, natural or synthetic rubbers, mineral oils, lubricating oils, adhesives, and paints, deteriorate due to the action of heat, oxygen, and the others during production and during use, and that the commercial value thereof is significantly impaired with a decrease in the strength and the physical properties of the organic materials, a change in their flowability, their coloration, a decrease in their surface properties, and the others due to phenomena such as cleaving and crosslinking of molecules.

For the purpose of preventing such deterioration due to heat and oxygen, stabilizers such as various phenol-based antioxidants and phosphorus-based antioxidants have been conventionally developed, and it is known that by adding these to organic materials, the organic materials can be stabilized. Examples of phosphorus-based antioxidants conventionally used for such a purpose include tris(2,4-di-t-butylphenyl) phosphite and tris(nonylphenyl) phosphite (abbreviation: TNPP).

But TNPP generally produces nonylphenol by hydrolysis during storage and during use, and it is reported that this nonylphenol has endocrine disrupting action. Therefore, it cannot be said that TNPP is an antioxidant having high safety, and its alternative is required.

Patent Literature 1 and Patent Literature 2 disclose using the reaction product of cardanol, which is a cashew oil extract, and phosphorus trichloride as an antioxidant.

Citation List

Patent Literature

Patent Literature 1: CN 108586522 A
Patent Literature 2: CN 102718796 A

Summary of Invention

Technical Problem

Cashew oil, which is a cashew nut shell liquid (CNSL), is an inexpensively available biomass raw material. In addition, reaction products derived from cardanol and the like that have been included in cashew oil do not produce nonylphenol and therefore have high safety.

But according to the study of the present inventors, it has been found that the reaction product of cardanol and phosphorus trichloride as disclosed in Patent Literature 1 and Patent Literature 2 evaporates easily and does not have a sufficient stabilizing effect on organic materials against deterioration due to heat and oxygen.

Therefore, it is an object of the present invention to provide a stabilizer that is excellent in evaporation resistance and effective for the improvement of the thermal stability and oxidation stability of organic materials and has high safety.

Solution to Problem

The present inventors have studied diligently in order to solve the problems, and, as a result, arrived at the present invention. Specifically, the present invention provides the following preferred aspects.

[1] A phosphite composition including:

a phosphite compound A0 represented by formula (1):

[Formula 1]

(1)

wherein
$R_1$ each independently represents a $-C_{15}H_{25-31}$ group,
$R_2$ each independently represents a hydrogen atom or a hydroxyl group, and
$R_3$ each independently represents a hydrogen atom or a methyl group; and
an oligomer A derived from the compound A0, wherein
the oligomer A includes a structure represented by formula (2):

[Formula 2]

(2)

wherein
$R_1$ each independently represents a $-C_{15}H_{25-31}$ group,
$R_2$ each independently represents a hydrogen atom or a hydroxyl group,
$R_3$ each independently represents a hydrogen atom or a methyl group, and
* represents a bond,
a number average molecular weight of the oligomer A is 1,900 to 30,000, and
the phosphite composition has a content of the oligomer A of 1% or more.

[2] The phosphite composition according to [1], wherein the oligomer A includes a compound represented by formula (3) :

[Formula 3]

(3)

wherein

$R_1$ each independently represents a $-C_{15}H_{25-31}$ group,
$R_2$ each independently represents a hydrogen atom or a hydroxyl group, and
$R_3$ each independently represents a hydrogen atom or a methyl group.

[3] The phosphite composition according to [1] or [2], wherein the oligomer A includes a compound represented by formula (4):

[Formula 4]

(4)

wherein

$R_1$ each independently represents a $-C_{15}H_{25-31}$ group,
$R_2$ each independently represents a hydrogen atom or a hydroxyl group, and
$R_3$ each independently represents a hydrogen atom or a methyl group.

[4] The phosphite composition according to any one of [1] to [3], wherein the content of the oligomer A is 70% or less.
[5] The phosphite composition according to any one of [1] to [4], wherein the compound A0 and the oligomer A are derived from a cashew oil extract.

[6] A stabilizer including the phosphite composition according to any one of [1] to [5].
[7] A stabilizer composition including the stabilizer according to [6] and a stabilizer other than the stabilizer according to [6].
[8] The stabilizer composition according to [7], wherein the stabilizer other than the stabilizer according to [6] includes at least one stabilizer selected from the group consisting of phenol-based antioxidants, sulfur-based antioxidants, and phosphorus-based antioxidants other than the stabilizer according to [6].
[9] An organic material composition including the phosphite composition according to any one of [1] to [5] and an organic material.
[10] The organic material composition according to [9], wherein the organic material includes a polyolefin.

Advantageous Effect of Invention

According to the present invention, it is possible to provide a stabilizer that is excellent in evaporation resistance and effective for the improvement of the thermal stability and oxidation stability of organic materials and has high safety.

Description of Embodiments

Embodiments of the present invention will be described in detail below. The scope of the present invention is not limited to the embodiments described here, and various changes can be made without departing from the spirit of the present invention.

[Phosphite Composition]

The phosphite composition of the present invention includes a phosphite compound A0 (hereinafter also referred to as a "compound A0") represented by formula (1) and an oligomer A derived from the compound A0 (hereinafter also referred to as an "oligomer A"), and has a content of the oligomer A of 1% or more.

<Phosphite Compound A0>

The phosphite compound A0 included in the phosphite composition of the present invention is represented by formula (1):

[Formula 5]

$R_1$ $R_2$ $R_3$ O P O O $R_1$ $R_2$ $R_3$ $R_3$ $R_2$ $R_1$ (1)

wherein

$R_1$ each independently represents a $-C_{15}H_{25-31}$ group,
$R_2$ each independently represents a hydrogen atom or a hydroxyl group, and
$R_3$ each independently represents a hydrogen atom or a methyl group.

In formula (1), $R_1$ each independently represents a $-C_{15}H_{25-31}$ group, and these may be the same as or different

from each other. The $-C_{15}H_{25-31}$ group is a linear hydrocarbon group having 0 to 3 double bonds, and examples thereof include groups represented by the following formulas (R1-1) to (R1-4):

[Formula 6]

(R1-1)
(R1-2)
(R1-3)
(R1-4)

In formula (1), $R_2$ each independently represents a hydrogen atom or a hydroxyl group. $R_2$ in formula (1) may be the same as or different from each other.

In formula (1), $R_3$ each independently represents a hydrogen atom or a methyl group. $R_3$ in formula (1) may be the same as or different from each other.

In one embodiment of the present invention, the compounds A0 included in the phosphite composition may be the same as or different from each other.

In one embodiment of the present invention, the molecular weight of the compound A0 is preferably 923 to 1032. The molecular weight of the compound A0 in terms of polystyrene obtained by gel permeation chromatography (hereinafter also referred to as GPC) measurement is preferably 1080 or more and less than 1820.

In one embodiment of the present invention, the content of the compound A0 included in the phosphite composition is preferably 1% or more, more preferably 10% or more, further preferably 20% or more, still more preferably 30% or more, particularly preferably 50% or more, particularly more preferably 70% or more, and most preferably 80% or more and preferably 99% or less, more preferably 97% or less, further preferably 95% or less, and particularly preferably 93% or less. When the content of the compound A0 is equal to or more than the lower limit, the phosphite composition tends to have a reduced yellowness index (hereinafter also referred to as "YI"). When the content of the compound A0 is equal to or less than the upper limit, the phosphite composition tends to have improved evaporation resistance.

The content of the compound A0 can be obtained by calculating the RI area percentage of the compound A0 and the RI area percentage of the oligomer A by GPC analysis.

<Oligomer A>

The present inventors have pursued studies on the evaporation resistance of the phosphite compound A0 and the stabilizing effect of the compound A0 on organic materials against heat and oxygen, and have surprisingly found that when the oligomer A derived from the compound A0 is added to a content of the oligomer A of 1% or more, a phosphite composition is obtained that is excellent in evaporation resistance, and can exert an excellent stabilizing effect against heat and oxygen when added to an organic material. The reason for this is probably because the oligomer A has a larger molecular weight and a higher phosphorus atom concentration per unit molecular weight than the compound A0.

On the other hand, when the content of the oligomer A is less than 1%, the evaporation resistance of the phosphite composition and the stabilizing effect of the phosphite composition on organic materials against heat and oxygen tend to decrease.

In one embodiment of the present invention, the content of the oligomer A (hereinafter also referred to as an oligomer content) included in the phosphite composition is preferably 3% or more, more preferably 5% or more, and further preferably 7% or more. The content of the oligomer A is less than 100%, preferably 99% or less, more preferably 90% or less, further preferably 80% or less, still more preferably 70% or less, particularly preferably 50% or less, particularly more preferably 30% or less, and most preferably 20% or less. When the content of the oligomer A is equal to or more than the lower limit, the phosphite composition tends to have improved evaporation resistance, and the improving effect of the phosphite composition on the thermal stability and oxidation stability of organic materials is easily enhanced. When the content of the oligomer A is less than the upper limit or equal to or less than the upper limit, the phosphite composition tends to have a reduced YI.

The content of the oligomer A can be obtained by calculating the RI area percentage of the compound A0 and the RI area percentage of the oligomer A by GPC analysis. Specifically, the content of the oligomer A can be obtained

by the following formula:

$$\text{content of oligomer A} = \text{RI area percentage of oligomer A}/(\text{RI area percentage of oligomer A} + \text{RI area percentage of compound A0})$$

and can be measured, for example, by a method described in Examples.

In the present invention, the oligomer A derived from the compound A0 includes: a compound including two or more phosphite structures, and 2n + 1 (n represents the number of phosphite structures, and n is an integer of 2 or more), that is, five or more, benzene ring structures included in the compound A0; and a mixture of the compounds. The benzene ring structure included in the compound A0 may be, for example, a structure represented by formula (Z):

[Formula 7]

wherein $R_a$ represents $R_2$ or a bond, * represents a bond, and $R_1$ to $R_3$ are the same as $R_1$ to $R_3$ in formula (1) .

The oligomer A includes a structure represented by formula (2):

[Formula 8]

wherein * represents a bond, and $R_1$ to $R_3$ are the same as $R_1$ to $R_3$ in formula (1).

In the present invention, the oligomer A includes a compound obtained by linking three benzene ring structures to one phosphite structure, or in other words, a compound obtained by alternately linking phosphite structures, and benzene ring structures included in the compound A0, or a compound obtained by linking, via phosphite structures, benzene ring structures included in the compound A0. Such a compound may be, for example, a compound represented by formula (E):

[Formula 9]

(E)

wherein T represents a structure M or a structure N represented by formula (M) or formula (N):

[Formula 10]

(M) (N)

wherein * represents a bond attached to an oxygen atom in formula (E), T represents the structure M or the structure N, and $R_1$ to $R_3$ are the same as $R_1$ to $R_3$ in formula (1),

and at least one of the three T included in formula (E) is the structure N.

In the present invention, among the oligomers A, those having two phosphite structures are sometimes referred to as dimers, those having three phosphite structures are sometimes referred to as trimers, and those having n phosphite structures are sometimes referred to as n-mers.

The oligomer A includes, for example, a compound in which a benzene ring Z included in a compound A0 is further bonded via a phosphite group to at least one of the three benzene rings included in another compound A0, and, in some cases, also includes a compound in which still another benzene ring Z is further bonded to the bonded benzene ring via a phosphite group, and similarly also includes a compound in which benzene rings Z are bonded via phosphite groups until the compound becomes an n-mer. The benzene rings Z may be the benzene rings represented by the formula (Z).

In one embodiment of the present invention, the oligomer A preferably includes a dimer in view of easily enhancing the evaporation resistance of the phosphite composition and the stabilizing effect of the phosphite composition on organic materials. Examples of the dimer include compounds represented by formula (3):

[Formula 11]

(3)

wherein $R_1$ to $R_3$ are the same as $R_1$ to $R_3$ in formula (1) .

In one embodiment of the present invention, the oligomer A preferably includes a trimer in view of easily enhancing the evaporation resistance of the phosphite composition and the stabilizing effect of the phosphite composition on organic materials. Examples of the trimer include compounds represented by formula (4):

[Formula 12]

(4)

wherein $R_1$ to $R_3$ are the same as $R_1$ to $R_3$ in formula (1) .

In one embodiment of the present invention, the oligomer A may include a tetramer and an n-mer wherein n is tetra or higher. The n-mer wherein n is tetra or higher may not include a branch or may include a branch. For example, in the case of a tetramer, it may be a compound including no branch represented by formula (5), or a compound including a branch represented by formula (6) .

[Formula 13]

(5)

[Formula 14]

(6)

wherein $R_1$ to $R_3$ are the same as $R_1$ to $R_3$ in formula (1)

What oligomer is included in the oligomer A can be confirmed by GPC analysis. For example, in the case of a dimer, when a peak can be found within the molecular weight range of 1820 or more and less than 2500 in terms of polystyrene in GPC analysis, it can be said that a dimer is included in the oligomer A. Similarly, in the case of a trimer, when a peak can be confirmed within the molecular weight range of 2500 or more and less than 3200 in terms of polystyrene in GPC analysis, it can be said that a trimer is included in the oligomer A.

In the present invention, the number average molecular weight of the oligomer A is 1,900 to 30,000. When the number average molecular weight of the oligomer A is within the range, the phosphite composition tends to have improved evaporation resistance, and the improving effect of the phosphite composition on the thermal stability and oxidation stability of organic materials is easily enhanced. On the other hand, if the number average molecular weight of the oligomer A is outside the range, the evaporation resistance of the phosphite composition and the stabilizing effect of the phosphite composition on organic materials against heat or oxygen tends to be poor.

In one embodiment of the present invention, the number average molecular weight of the oligomer A is preferably 1,900 or more, more preferably 2,000 or more, and further preferably 2,200 or more and preferably 20,000 or less, more preferably 10,000 or less, further preferably 5,000 or less, and still more preferably 3,000 or less. When the number average molecular weight of the oligomer A is equal to or more than the lower limit, the phosphite composition tends to have improved the evaporation resistance. When the number average molecular weight is equal to or less than the upper limit, the improving effect of the phosphite composition on the thermal stability and oxidation stability of organic materials is easily enhanced.

The number average molecular weight of the oligomer A can be obtained in terms of standard polystyrene by performing GPC measurement, and can be obtained, for example, by a method described in Examples.

In one embodiment of the present invention, the compound A0 and the oligomer A included in the phosphite composition of the present invention are preferably derived from a cashew oil extract, in view of easily enhancing the safety of the phosphite composition and in view of effectively utilizing an inedible site as resources. Examples of the cashew oil extract include cardanol, cardol, and methyl cardol included in cashew oil. In the present invention, the compound A0 and the oligomer A derived from a cashew oil extract means that the compound A0 and the oligomer A are prepared from cardanol, cardol, and/or methyl cardol, which are cashew oil extracts, as starting materials.

In one embodiment of the present invention, the phosphite composition may further contain an acid-bonded metal salt in view of easily improving the hydrolysis resistance of the compound A0 and the oligomer A included in the phosphite composition.

Examples of the acid-bonded metal salt include hydrotalcites. Examples of the hydrotalcites include double

salt compounds represented by the following formula:

$$M^{a+}_{1-x}\cdot M^{3+}_{x}\cdot(OH^{-})_2\cdot(A^{n-})_{x/n}\cdot pH_2O$$

wherein $M^{2+}$ represents Mg, Ca, Sr, Ba, Zn, Pb, Sn, and/or Ni, $M^{3+}$ represents Al, B, or Bi, n represents a numerical value of 1 to 4, x represents a numerical value of 0 to 0.5, p represents a numerical value of 0 to 2, and $A^{n-}$represents an anion having a valence of n.

Here, specific examples of the anion having a valence of n represented by $A^{n-}$ include $OH^-$, $Cl^-$, $Br^-$, $I^-$, $ClO^{4-}$, $HCO^{3-}$, $C_6H_5COO^-$, $CO_3{}^{2-}$, $SO^{2-}$, -OOCCOO-, (CHOHCOO) $_2{}^{2-}$, $C_2H_4(COO)_2{}^{2-}$, $(CH_2COO)_2{}^{2-}$, $CH_3CHOHCOO^-$, $SiO_3{}^{2-}$, $SiO_4{}^{4-}$, Fe (CN) $_6{}^{4-}$, $BO^{3-}$, $PO_3{}^{3-}$, and $HPO_4{}^{2-}$.

More preferred examples of the hydrotalcites represented by the above formula include hydrotalcites represented by the formula below:

$$Mg_{1-x}\,Al_x(OH)_2(CO_3)_{x/2}\cdot pH_2O$$

wherein x and p are as defined above.

The hydrotalcites may be natural products or synthetic products and can be used regardless of their crystal structures, crystal particle diameters, and the others.

Further, the ultrafine zinc oxide disclosed in Japanese Patent Laid-Open No. 6-329830, and the inorganic compounds disclosed in Japanese Patent Laid-Open No. 7-278164, for example, can also be used as the acid-bonded metal salt.

The amount of the acid-bonded metal salt used may be, for example, 0.01 to 25% by mass based on the total amount of the phosphite composition of the present invention.

The phosphite composition of the present invention may further include other additives as needed. Examples of other additives include an ultraviolet absorbing agent, a peroxide scavenger, a lubricant, a plasticizer, a flame retardant, a nucleating agent, a metal deactivator, an antistatic agent, a pigment, a filler, a pigment, an antiblocking agent, a surfactant, a processing aid, a foaming agent, an emulsifier, a brightener, a neutralizing agent, and further a coloration improving agent such as 9,10-dihydro-9-oxa-10-phosphophenanthrene-10-oxide. The additives may be used singly or in combination of two or more.

Examples of the ultraviolet absorbing agent include the following. As the ultraviolet absorbing agent, the following compounds may be used singly, or two or more may be used in combination.

(1) Examples of Salicylate Derivatives

Phenyl salicylate, 4-t-butylphenyl salicylate, 2,4-di-t-butylphenyl 3',5'-di-t-butyl-4'-hydroxybenzoate, 4-t-octylphenyl salicylate, bis(4-t-butylbenzoyl)resorcinol, benzoylresorcinol, hexadecyl 3',5'-di-t-butyl-4'-hydroxybenzoate, octadecyl 3',5'-di-t-butyl-4'-hydroxybenzoate, 2-methyl-4,6-di-t-butylphenyl 3',5'-dit-butyl-4'-hydroxybenzoate, and mixtures thereof, and the like.

(2) Examples of 2-Hydroxybenzophenone Derivatives

2,4-Dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone, and mixtures thereof, and the like.

(3) Examples of 2-(2'-Hydroxyphenyl)benzotriazoles

2-(2-Hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-s-butyl-2'-hydroxy-5'-t-butylphenyl)benzotriazole, 2-(2'-hydroxy-4'-octyloxyphenyl)benzotriazole, 2-(3',5'-di-t-amyl-2'-hydroxyphenyl)benzotriazole, 2-[2'-hydroxy-3',3'-bis($\alpha$,$\alpha$-dimethylbenzyl)pheny]-2H-benzotriazole, 2-[(3'-t-butyl-2'-hydroxyphenyl)-5'-(2-octyloxycarbonylethyl)phenyl]-5-chlorobenzotriazole, 2-[3'-t-butyl-5'-[2-(2-ethylhexyloxy)carbonylethyl]-2'-hydroxyphenyl]-5-chlorobenzotriazole, 2-[3'-t-butyl-3'-hydroxy-5'-(2-methoxycarbonylethyl)phenyl]-5-chlorobenzotriazole, 2-[3'-t-butyl-2'-hydroxy-5'-(2-methoxycarbonylethyl)phenyl]benzotriazole, 2-[3'-t-butyl-2'-hydroxy-5-(2-octyloxycarbonylethyl)phenyl]benzotriazole, 2-[3'-t-butyl-2'-hydroxy-5'-[2-(2-ethylhexyloxy)carbonylethyl]phenyl]benzotriazole, 2-[2-hydroxy-3-(3,4,5,6-tetrahydrophthalimidomethyl)-5-methylphenyl]benzotriazole, 2-(3,5-di-t-butyl-2-hydroxyphenyl)-5-chlorobenzotriazole, mixtures of 2-(3'-dodecyl-2'-hydroxy-5'-methylphenyl)benzotriazole and 2-[3'-t-butyl-2'-hydroxy-5'-(2-isooctyloxycarbonylethyl)phenyl]benzotriazole, 2,2'-methylenebis[6-(2H-benzotriazol-2-yl)-4-(1,1,3,3-tetramethylbutyl)phenol, 2,2'-methylenebis[4-t-butyl-6-(2H-benzotriazol-2-yl)phenol], condensates of poly(3 to 11)(ethylene glycol) and 2-[3'-t-butyl-2'-hydroxy-5'-(2-methoxycarbonylethyl)phenyl]benzotriazole, condensates of poly(3 to 11)(ethylene glycol) and methyl 3-[3-(2H-benzotriazol-2-yl)-5-t-butyl-4-hydroxyphenyl] propionate, 2-ethylhexyl 3-[3-t-butyl-5-(5-chloro-2H-benzotriazol-2-yl)-4-hydroxyphenyl] propionate, octyl 3-[3-t-butyl-5-(5-chloro-2H-benzotriazol-2-yl)-4-hydroxyphenyl] propionate, methyl 3-[3-t-butyl-5-(5-chloro-2H-benzotriazol-2-yl)-4-hydroxyphenyl] propionate, 3-[3-t-butyl-5-(5-chloro-2H-benzotriazol-2-yl)-4-hydroxyphenyl]propionic acid, and mixtures thereof, and the like.

Examples of the peroxide scavenger include esters of β-thiodipropionic acid, mercaptobenzimidazole, the zinc salt of 2-mercaptobenzimidazole, the zinc salt of dibutyldithiocarbamic acid, dioctadecyl disulfide, pentaerythritol tetrakis(β-dodecylmercapto)propionate, and mixtures thereof.

Examples of the lubricant include aliphatic hydrocarbons such as paraffins and waxes, higher fatty acids having 8 to 22 carbon atoms, metal (Al, Ca, Mg, and Zn) salts of higher fatty acids having 8 to 22 carbon atoms, aliphatic alcohols having 8 to 22 carbon atoms, polyglycols, esters of higher fatty acids having 4 to 22 carbon atoms and aliphatic monohydric alcohols having 4 to 18 carbon atoms, higher aliphatic amides having 8 to 22 carbon atoms, silicone oils, and rosin derivatives.

Examples of the nucleating agent include the following: sodium 2,2'-methylenebis(4,6-di-t-butylphenyl) phosphate, dihydroxyaluminum [2,2'-methylenebis(4,6-di-t-butylphenyl) phosphate], hydroxyaluminum bis[2,2'-methylenebis(4,6-di-t-butylphenyl) phosphate], aluminum tris[2,2'-methylenebis(4,6-di-t-butylphenyl) phosphate], sodium bis(4-t-butylphenyl) phosphate, metal salts of benzoates such as sodium benzoate, aluminum p-t-butylbenzoate, 1,3:2,4-bis(O-benzylidene) sorbitol, 1,3:2,4-bis(O-methylbenzylidene) sorbitol, 1,3:2,4-bis(O-ethylbenzylidene) sorbitol, 1,3-0-3,4-dimethylbenzylidene-2,4-O-benzylidene sorbitol, 1,3-0-benzylidene-2,4-O-3,4-dimethylbenzylidene sorbitol, 1,3:2,4-bis(O-3,4-dimethylbenzylidene) sorbitol, 1,3-O-p-chlorobenzylidene-2,4-O-3,4-dimethylbenzylidene sorbitol, 1,3-O-3,4-dimethylbenzylidene-2,4-O-p-chlorobenzylidene sorbitol, 1,3:2,4-bis(O-p-chlorobenzylidene) sorbitol, and mixtures thereof.

Examples of the filler include calcium carbonate, silicates, glass fibers, asbestos, talc, kaolin, mica, barium sulfate, carbon black, carbon fibers, zeolite, and mixtures thereof.

Examples of the neutralizing agent include calcium stearate, zinc stearate, magnesium stearate, hydrotalcite (basic magnesium aluminum hydroxycarbonate hydrate), melamine, polyamides, polyurethanes, and mixtures thereof.

The content of these other additives can be appropriately selected in a range that does not impair the effect of the present invention, and the total content of other additives may be preferably 200% by mass or less, more preferably 100% by mass or less, and further preferably 50% by mass or less based on the total mass of the compound A0 and the oligomer A included in the phosphite composition.

<Phosphite Composition>

The phosphite composition of the present invention includes the compound A0 and the oligomer A, and the content of the oligomer A is 1% or more. Therefore the phosphite composition has excellent evaporation resistance and is effective for the improvement of the thermal stability and oxidation stability of organic materials, and thus can exert a high stabilizing effect when added to an organic material. In addition, the phosphite composition of the present invention does not produce nonylphenol even when it hydrolyzes during storage or during use, and therefore it has high safety. Further, the phosphite composition of the present invention has a small YI, and therefore when it is added to an organic material, the resulting organic material composition tends to have a good hue. Examples of the organic materials that the phosphite composition of the present invention can stabilize include the organic materials described in the section [Stabilizer] described later.

In one embodiment of the present invention, the YI (yellowness index) of the phosphite composition is preferably 15 or less, more preferably 10 or less, further preferably 8 or less, still more preferably 5 or less, and particularly preferably 3 or less in view of easily obtaining an organic material composition having a good hue. The lower limit value is not particularly limited, and the YI (yellowness index) of the phosphite composition may be, for example, 0 or more. The YI can be measured using a hue meter and can be measured, for example, by a method described in Examples.

The evaporation resistance of the phosphite composition of the present invention can be evaluated in terms of the temperature for mass loss. In one embodiment of the present invention, the temperature for 10% mass loss of the phosphite composition is preferably 365°C or more, more preferably 370°C or more, and further preferably 375°C or more. The higher the temperature for mass loss is, the higher the heat resistance and the evaporation resistance of the phosphite composition are. Therefore, the upper limit is not particularly limited, and the temperature for 10% mass loss of the phosphite composition may be, for example, 430°C or less. The temperature for mass loss of the phosphite composition can be measured using a thermogravimetric differential thermal analyzer and can be measured, for example, by a method described in Examples.

[Method for Producing Phosphite Composition]

The method for producing the phosphite composition of the present invention is not particularly limited and may be a method including preparing each of the compound A0 and the oligomer A and mixing the obtained compound A0 and oligomer A to producing the phosphite composition of the present invention. However, it is preferably a method including reacting cashew oil with a phosphorus trihalide to directly produce the phosphite composition. The preferred method for producing will be described below.

The cashew oil used for the production of the phosphite composition of the present invention as a raw material includes cardanol and cardol and/or methyl cardol. By using, as a raw material, cashew oil including cardol and/or methyl cardol in addition to cardanol, the oligomer A can also be produced in addition to the compound A0, so that a phosphite composition including both the compound A0 and the oligomer A can be produced.

The content of each of cardanol, cardol, and methyl cardol that can be included in cashew oil can be appropriately selected according to the content of the oligomer A and the number average molecular weight of the oligomer A desired.

In one embodiment of the present invention, the total content of cardol and methyl cardol included in cashew oil is preferably 1% or more, more preferably 1.5% or more, and further preferably 2% or more in view of easily adjusting the oligomer content of the phosphite composition to be obtained at 1% or more. The total content is preferably 50% or less, more preferably 30% or less, and further preferably 20% or less in view of easily obtaining the phosphite composition with a reduced YI.

In one embodiment of the present invention, the content of cardanol included in cashew oil may be preferably 50% or more, more preferably 70% or more, and further preferably 80% or more in view of easily obtaining the phosphite composition with a reduced YI, and may be preferably 99% or less, more preferably 98.5% or less, and further preferably 98% or less in view of easily adjusting the oligomer content of the phosphite composition to be obtained at 1% or more.

In one embodiment of the present invention, the content of cardol (hereinafter also referred to as a "cardol content") included in cashew oil may be preferably 0.5% or more, more preferably 1% or more, and further preferably 1.5% or more in view of easily adjusting the oligomer content of the phosphite composition to be obtained at 1% or more, and may be preferably 50% or less, more preferably 30% or less, and further preferably 20% or less in view of easily obtaining the phosphite composition with a reduced YI.

In one embodiment of the present invention, the content of methyl cardol (hereinafter also referred to as a "methyl cardol content") included in cashew oil may be preferably 0.1% or more, more preferably 0.5% or more, and further preferably 0.8% or more in view of easily adjusting the oligomer content of the phosphite composition to be obtained at 1% or more, and may be preferably 20% or less, more preferably 10% or less, and further preferably 5% or less in view of easily obtaining the phosphite composition with a reduced YI.

The content of each of cardanol, cardol, and methyl cardol included in cashew oil can be calculated by obtaining the area ratios of the peaks of cardanol, cardol, and methyl cardol by liquid chromatography analysis, and can be measured, for example, by a method described in Examples.

Examples of the phosphorus trihalide include phosphorus trichloride and phosphorus tribromide. Among phosphorus trihalides, phosphorus trichloride is preferred in view of easily improving the yield and also from an economical viewpoint in industrial production.

In one embodiment of the present invention, when reacting cashew oil with the phosphorus trihalide, a catalyst is preferably used in view of easily promoting the reaction. Examples of the catalyst include dehydrohalogenating agents such as amines, pyridines, pyrrolidines, and amides, and hydroxides of alkali metals or alkaline earth metals. These may be used singly or in combination of two or more, and, for example, one dehydrohalogenating agent or hydroxide of an alkali metal or an alkaline earth metal may be used, or two or more of these may be used in combination.

As the amines, any of primary amines, secondary amines, and tertiary amine may be used. Examples of the amines include t-butylamine, t-pentylamine, t-hexylamine, t-octylamine, di-t-butylamine, di-t-pentylamine, di-t-hexylamine, di-t-octylamine, trimethylamine, triethylamine, N,N-diisopropylethylamine, N,N-dimethylaniline, and N,N-diethylaniline. As the amine, triethylamine is preferably used in view of easily promoting the reaction. Examples of the pyridines include pyridine and picoline, and pyridine is preferably used. Examples of the pyrrolidines include 1-methyl-2-pyrrolidine. Examples of the amides include N,N-dimethylformamide and N,N-dimethylacetamide, and N,N-dimethylformamide is preferably used.

Examples of the hydroxides of alkali metals or alkaline earth metals include sodium hydroxide and calcium hydroxide, and sodium hydroxide is preferably used.

The reaction is usually performed in an organic solvent. The organic solvent is not particularly limited as long as it does not inhibit the reaction. Examples of the organic solvent include aromatic hydrocarbons, aliphatic hydrocarbons, oxygen-containing hydrocarbons, and halogenated hydrocarbons. The reaction may be performed in one organic solvent, a mixed solvent of two or more organic solvents, or a mixed solvent of the organic solvent and another solvent.

Examples of the aromatic hydrocarbons include benzene, toluene, xylene, and ethylbenzene. Examples of the aliphatic hydrocarbons include n-hexane, n-heptane, and n-octane. Examples of the oxygen-containing hydrocarbons

include diethyl ether, dibutyl ether, tetrahydrofuran, and 1,4-dioxane. Examples of the halogenated hydrocarbons include chloroform, carbon tetrachloride, monochlorobenzene, dichloromethane, 1,2-dichloroethane, and dichlorobenzene.

Among these organic solvents, toluene, xylene, n-hexane, n-heptane, diethyl ether, tetrahydrofuran, 1,4-dioxane, chloroform, or dichloromethane is preferably used in view of yield improvement.

In the production of the phosphite composition, the amounts of cashew oil, the phosphorus trihalide, and the amine used can be appropriately selected according to the oligomer content and the number average molecular weight of the oligomer A desired.

In one embodiment of the present invention, the amount of the phosphorus trihalide used is preferably 1 part by mass or more, more preferably 5 parts by mass or more, and further preferably 10 parts by mass or more and preferably 40 parts by mass or less, more preferably 30 parts by mass or less, and further preferably 20 parts by mass or less per 100 parts by mass of cashew oil. When the amount of the phosphorus trihalide used is within the range, the oligomer content and the number average molecular weight of the oligomer A in the obtained phosphite composition are easily adjusted within the above ranges.

In one embodiment of the present invention, the amount of the catalyst such as an amine used is preferably 0.5 mol or more, more preferably 1 mol or more, and further preferably 3 mol or more and preferably 10 mol or less, more preferably 7 mol or less, and further preferably 5 mol or less per 1 mol of the phosphorus trichloride. When the amount of the amine used is within the range, the reaction is easily promoted.

The method for reacting cashew oil with the phosphorus trihalide is not particularly limited, but in view of easily controlling the heat of reaction, the reaction is preferably performed by a method including adding the phosphorus trihalide to a mixture including cashew oil and the catalyst by dropping or the like, or a method including adding cashew oil to a mixture including the phosphorus trihalide and the catalyst by dropping or the like.

The temperature of the reaction of cashew oil with the phosphorus trihalide is not particularly limited and may be, for example, 60 to 200°C, preferably 100 to 130°C, and the reaction time is not particularly limited either and may be, for example, about 30 min to 12 h. The reaction may be performed under air or under an inert gas atmosphere such as nitrogen gas or argon gas, but is preferably performed under an inert gas atmosphere in view of easily suppressing the hydrolysis of the phosphorus trihalide. The reaction may be performed under any of normal pressure, increased pressure, or reduced pressure.

The phosphite composition can be isolated by separation and purification by a commonly used method, for example, separation means such as filtration, concentration, extraction, crystallization, recrystallization, or column chromatography, or separation means combining these.

[Stabilizer]

The phosphite composition of the present invention has excellent evaporation resistance and is effective for the improvement of the thermal stability and oxidation stability of organic materials, and therefore can exert a high stabilizing effect when added to an organic material, as described above. Therefore, the present invention also encompasses a stabilizer including the phosphite composition of the present invention.

In one embodiment of the present invention, the content of the phosphite composition included in the stabilizer of the present invention is preferably 90% by mass or more, more preferably 95% by mass or more, and still more preferably 98% or more based on the total mass of the stabilizer in view of easily enhancing the stabilizing effect on organic materials. The upper limit is not particularly limited, and the content of the phosphite composition may be, for example, 100% by mass or less.

Examples of the organic materials that the stabilizer of the present invention can stabilize include the following but are not limited to these organic materials. The organic material may be one organic material or a mixture of two or more organic materials.

(1) Polyethylene, for example, high density polyethylene (HD-PE), low density polyethylene (LD-PE), and linear low density polyethylene (LLDPE),
(2) polypropylene,
(3) methylpentene polymers,
(4) EEA (ethylene/ethyl acrylate copolymer) resins,
(5) ethylene/vinyl acetate copolymer resins,
(6) polystyrenes, for example, polystyrene, poly(p-methylstyrene), and poly($\alpha$-methylstyrene),
(7) AS (acrylonitrile/styrene copolymer) resins,
(8) ABS (acrylonitrile/butadiene/styrene copolymer) resins,
(9) AAS (special acrylic rubber/acrylonitrile/styrene copolymer) resins,
(10) ACS (acrylonitrile/chlorinated polyethylene/styrene copolymer) resins,
(11) chlorinated polyethylene, polychloroprene, and chlorinated rubbers,

(12) polyvinyl chloride and polyvinylidene chloride,
(13) methacrylic resins,
(14) ethylene/vinyl alcohol copolymer resins,
(15) fluororesins,
(16) polyacetals,
(17) grafted polyphenylene ether resins and polyphenylene sulfide resins,
(18) polyurethanes,
(19) polyamides,
(20) polyester resins, for example, polyethylene terephthalate and polybutylene terephthalate,
(21) polycarbonates,
(22) polyacrylates,
(23) polysulfone, polyetheretherketone, and polyethersulfone,
(24) thermoplastic resins such as aromatic polyester resins,
(25) epoxy resins,
(26) diallyl phthalate prepolymers,
(27) silicone resins,
(28) unsaturated polyester resins,
(29) acrylic-modified benzoguanamine resins,
(30) benzoguanamine/melamine resins,
(31) thermosetting resins such as urea resins,
(32) polybutadiene,
(33) 1,2-polybutadiene,
(34) polyisoprene,
(35) styrene/butadiene copolymers,
(36) butadiene/acrylonitrile copolymers,
(37) ethylene/propylene copolymers,
(38) silicone rubbers,
(39) epichlorohydrin rubbers,
(40) acrylic rubbers,
(41) natural rubbers,
(42) chlorine rubber-based paints,
(43) polyester resin paints,
(44) urethane resin paints,
(45) epoxy resin paints,
(46) acrylic resin paints,
(47) vinyl resin paints,
(48) aminoalkyd resin paints,
(49) alkyd resin paints,
(50) nitrocellulose resin paints,
(51) oil paints,
(52) waxes,
(53) lubricating oils, and the like.

Among these organic materials, thermoplastic resins, especially polyolefins such as polyethylene, for example, HD-PE, LD-PE, and LLDPE, and polypropylene, engineering plastics such as polyamides, polyethylene terephthalate, polybutylene terephthalate, and polycarbonates are preferred, for example, and polyolefins are more preferred.

The polyolefins are not particularly limited and may be, for example, those obtained by radical polymerization or those produced by polymerization using a catalyst containing a metal of group IVb, Vb, VIb, or VIII of the periodic table. Examples of the catalyst containing such a metal include metal complexes having one or more ligands, for example, oxides, halogen compounds, alcoholates, esters, or aryls coordinated by $\pi$ or $\sigma$ bonds. These complexes may be metal complexes as they are, or may be supported on carriers such as magnesium chloride, titanium chloride, alumina, or silicon oxide. As the polyolefins, those produced using, for example, a Ziegler-Natta catalyst, a TNZ catalyst, a metallocene catalyst, or the Phillips catalyst are preferably used.

The engineering plastics are not particularly limited either. The polyamide resins may be those that have an amide bond in the polymer chain and can be heated and melted. The polyamide resins may be those produced by any method, and examples of the polyamide resins include those produced by methods such as the condensation reactions of diamines and dicarboxylic acids, the condensation reactions of aminocarboxylic acids, and the ring-opening polymerization of lactams. Examples of the polyamide resins include nylon 66, nylon 69, nylon 610, nylon 612, poly-bis-(p-aminocyclohexyl)methane dodecamide, nylon 46, nylon 6, nylon 12, and copolymers such as nylon 66/6, which is a copolymer of nylon 66 and nylon 6, and nylon 6/12. The polyester resins may be those that have an ester bond in the polymer chain and can be heated and melted, and examples of the polyester resins include polyesters obtained by the polycondensation of dicarboxylic acids and dihydroxy compounds. The polyester resins may be either homopolyesters or copolyesters. The polycarbonate resins may be those that have a carbonate bond in the polymer chain and can be heated and melted, and examples of the polycarbonate resins include polycarbonates obtained by reacting a carbonate precursor such as phosgene or diphenyl carbonate with an aromatic hydroxy compound or an aromatic hydroxy compound and a small amount of a polyhydroxy compound in the presence of a solvent, an acid receptor, and a molecular weight adjusting agent. The polycarbonate resins may be linear or branched and may be copolymers.

[Stabilizer Composition]

The stabilizer of the present invention also encompasses a stabilizer composition including, in addition to the stabilizer of the present invention (hereinafter also referred to as a "stabilizer X"), a stabilizer other than the stabilizer of the present invention (hereinafter also referred to as a "stabilizer Y"). By including the stabilizer Y in addition to the stabilizer X, the stabilizing effect on organic materials can be further improved.

In one embodiment of the present invention, the content of the stabilizer X is preferably 10% by mass or more, more preferably 20% by mass or more, and further preferably 40% by mass or more based on the total mass of the stabilizer composition in view of easily improving the thermal stability and oxidation stability of organic materials by the stabilizer composition, and preferably less than 100% by mass, more preferably 90% by mass or less, and further preferably 70% by mass or less in view of the synergistic effect with the stabilizer Y.

Examples of the stabilizer Y include phenol-based antioxidants, sulfur-based antioxidants, phosphorus-based antioxidants other than the stabilizer X, age resisters, light stabilizers, polyamide stabilizers, and auxiliary stabilizers.

Examples of the phenol-based antioxidants include the following.

(1) Examples of Alkylated Monophenols

2,6-Di-t-butyl-4-methylphenol, 2,4,6-tri-t-butylphenol, 2,6-di-t-butylphenol, 2-t-butyl-4,6-dimethylphenol, 2,6-di-t-butyl-4-ethylphenol, 2,6-di-t-butyl-4-n-butylphenol, 2,6-di-t-butyl-4-isobutylphenol, 2,6-dicyclopentyl-4-methylphenol, 2-($\alpha$-methylcyclohexyl)-4,6-dimethylphenol, 2,6-dioctadecyl-4-methylphenol, 2,4,6-tricyclohexylphenol, 2,6-di-t-butyl-4-methoxymethylphenol, 2,6-di-nonyl-4-methylphenol, 2,4-dimethyl-6-(1'-methylundecyl-1'-yl)phenol, 2,4-dimethyl-6-(1'-methylheptadecyl-1'-yl)phenol, 2,4-dimethyl-6-(1'-methyltridecyl-1'-yl)phenol, and mixtures thereof, and the like.

(2) Examples of Alkylthiomethylphenols

2,4-Dioctylthiomethyl-6-t-butylphenol, 2,4-dioctylthiomethyl-6-methylphenol, 2,4-dioctylthiomethyl-6-ethylphenol, 2,6-didodecylthiomethyl-4-nonylphenol, and mixtures thereof, and the like.

(3) Examples of Hydroquinones and Alkylated Hydroquinones

2,6-Di-t-butyl-4-methoxyphenol, 2,5-di-t-butylhydroquinone, 2,5-di-t-amylhydroquinone, 2,6-diphenyl-4-octadecyloxyphenol, 2,6-di-t-butylhydroquinone, 2,5-di-t-butyl-4-hydroxyanisole, 3,5-di-t-butyl-4-hydroxyphenyl stearate, bis(3,5-di-t-butyl-4-hydroxyphenyl) adipate, and mixtures thereof, and the like.

(4) Examples of Tocopherols

$\alpha$-Tocopherol, $\beta$-tocopherol, $\gamma$-tocopherol, $\delta$-tocopherol, and mixtures thereof, and the like.

(5) Examples of Hydroxylated Thiodiphenyl Ethers

2,2'-Thiobis(6-t-butylphenol), 2,2'-thiobis(4-methyl-6-t-butylphenol), 2,2'-thiobis(4-octylphenol), 4,4'-thiobis(3-methyl-6-t-butylphenol), 4,4'-thiobis(2-methyl-6-t-butylphenol), 4,4'-thiobis(3,6-di-t-amylphenol), 4,4'-(2,6-dimethyl-4-hydroxyphenyl) disulfide, and the like.

(6) Examples of Alkylidene Bisphenols and Derivatives Thereof

2,2'-Methylenebis(4-methyl-6-t-butylphenol), 2,2'-methylenebis(4-ethyl-6-t-butylphenol), 2,2'-methylenebis[4-methyl-6-($\alpha$-methylcyclohexyl)phenol)], 2,2'-methylenebis(4-methyl-6-cyclohexylphenol), 2,2'-methylenebis(4-methyl-6-nonylphenol), 2,2'-methylenebis(4,6-di-t-butylphenol), 2,2'-ethylidenebis(4,6-di-t-butylphenol), 2,2'-ethylidenebis(4-isobutyl-6-t-butylphenol), 2,2'-methylenebis[6-(α-methylbenzyl)-4-nonylphenol], 2,2'-methylenebis[4,6-(α,α-dimethylbenzyl)-4-nonylphenol], 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2-methylphenyl)butane, 2,6-bis(3-t-butyl-5-methyl-2-hydroxybenzyl)-4-methylphenol, 1,1,3-tris(5-t-butyl-4-hydroxy-2-methylphenyl)butane, 1,1-bis(5-t-butyl-4-hydroxy-2-methylphenyl)-3-n-dodecylmercaptobutane, ethylene glycol bis[3,3-bis-3'-t-butyl-4'-hydroxyphenyl) butyrate], bis(3-t-butyl-4-hydroxy-5-methylphenyl)dicyclopentadiene, bis[2-(3'-t-butyl-2'-hydroxy-5'-methylbenzyl)-6-t-butyl-4-methylphenyl] terephthalate, 1,1-bis(3,5-dimethyl-2-hydroxyphenyl)butane, 2,2-bis(3,5-di-t-butyl-4-hydroxyphenyl)propane, 2,2-bis(5-t-butyl-4-hydroxy-2-methylphenyl)-4-n-dodecylmercaptobutane, 1,1,5,5-tetra(5-t-butyl-4-hydroxy-2-methylphenyl)pentane, 2-t-butyl-6-(3'-t-butyl-5'-methyl-2'-hydroxybenzyl)-4-methylphenyl acrylate, 2,4-di-t-pentyl-6-[1-(2-hydroxy-3,5-di-t-pentylphenyl)ethyl]phenyl acrylate, and mixtures thereof, and the like.

(7) Examples of O-, N-, and S-Benzyl Derivatives

3,5,3',5'-Tetra-t-butyl-4,4'-dihydroxydibenzyl ether, octadecyl-4-hydroxy-3,5-dimethylbenzylmercaptoacetate, bis(4-t-butyl-3-hydroxy-2,6-dimethylbenzyl) dithioterephthalate, bis(3,5-di-t-butyl-4-hydroxybenzyl) sulfide, isooctyl-3,5-di-t-butyl-4-hydroxybenzylmercaptoacetate, and mixtures thereof, and the like.

(8) Examples of Hydroxybenzylated Malonate Derivatives

Dioctadecyl-2,2-bis(3,5-di-t-butyl-2-hydroxybenzyl) malonate, dioctadecyl-2-(3-t-butyl-4-hydroxy-5-methylbenzyl) malonate, didodecylmercaptoethyl-2,2-bis(3,5-di-t-butyl-4-hydroxybenzyl) malonate, bis[4-(1,1,3,3-tetramethylbutyl)phenyl]-2,2-bis(3,5-di-t-butyl-4-hydroxybenzyl) malonate, and mixtures thereof, and the like.

(9) Examples of Aromatic Hydroxybenzyl Derivatives

1,3,5-Trimethyl-2,4,6-tris(3,5-di-t-butyl-4-hydroxybenzyl)benzene, 1,4-bis(3,5-di-t-butyl-4-hydroxybenzyl)-2,3,5,6-tetramethylbenzene, 2,4,6-tris(3,5-t-butyl-4-hydroxybenzyl)phenol, and mixtures thereof, and the like.

(10) Examples of Triazine Derivatives

2,4-Bis(n-octylthio)-6-(4-hydroxy-3,5-di-t-butylanilino)-1,3,5-triazine, 2-n-octylthio-4,6-bis(4-hydroxy-3,5-di-t-butylanilino)-1,3,5-triazine, 2-n-octylthio-4,6-bis(4-hydroxy-3,5-di-t-butylphenoxy)-1,3,5-triazine, 2,4,6-tris(3,5-di-t-butyl-4-phenoxy)-1,3,5-triazine, tris(4-t-butyl-3-hydroxy-2,6-dimethylbenzyl) isocyanurate, tris(3,5-di-t-butyl-4-hydroxybenzyl) isocyanurate, 2,4,6-tris(3,5-di-t-butyl-4-hydroxyphenylethyl)-1,3,5-triazine, 2,4,6-tris(3,5-di-t-butyl-4-hydroxyphenylpropyl)-1,3,5-triazine, tris(3,5-dicyclohexyl-4-hydroxybenzyl) isocyanurate, tris[2-(3',5'-di-t-butyl-4'-hydroxycinnamoyloxy)ethyl] isocyanurate, and mixtures thereof, and the like.

(11) Examples of Benzylphosphonate Derivatives

Dimethyl-3,5-di-t-butyl-4-hydroxybenzylphosphonate, diethyl-3,5-di-t-butyl-4-hydroxybenzylphosphonate, dioctadecyl-3,5-di-t-butyl-4-hydroxybenzylphosphonate, dioctadecyl-5-t-butyl-4-hydroxy-3-methylbenzylphosphonate, a calcium salt of 3,5-di-t-butyl-4-hydroxybenzylphosphonic acid monoester, and mixtures thereof, and the like.

(12) Examples of Acylaminophenol Derivatives

4-Hydroxylauric acid anilide, 4-hydroxystearic acid anilide, octyl-N-(3,5-di-t-butyl-4-hydroxyphenyl) carbamate, and mixtures thereof, and the like.

(13) Examples of Esters of β-(3,5-Di-t-butyl-4-hydroxyphenyl)propionic Acid and Following Monohydric or Polyhydric Alcohols

Methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane, and mixtures thereof, and the like.

(14) Examples of Esters of β-(5-t-Butyl-4-hydroxy-3-methylphenyl)propionic Acid and Following Monohydric or Polyhydric Alcohols

Methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane, and mixtures thereof, and the like.

(15) Examples of Esters of β-(3,5-Dicyclohexyl-4-hydroxyphenyl)propionic Acid and Following Monohydric or Polyhydric Alcohols

Methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane, and mixtures thereof, and the like.

(16) Examples of Esters of 3,5-Di-t-butyl-4-hydroxyphenylacetic Acid and Following Monohydric or Polyhydric Alcohols

Methanol, ethanol, octanol, octadecanol, ethylene glycol, 1,3-propanediol, 1,4-butanediol, 1,6-hexanediol, 1,9-nonanediol, neopentyl glycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane, and mixtures thereof, and the like.

(17) Examples of Amides of β-(3,5-Di-t-butyl-4-hydroxyphenyl)propionic Acid

N,N'-Bis[3-(3',5'-di-t-butyl-4'-hydroxyphenyl)propionyl]hydrazine and mixtures thereof, and the like.

Examples of the sulfur-based antioxidants include the following. As the sulfur-based antioxidant, the following compounds may be used singly, or two or more may be used in combination.

Dilauryl 3,3'-thiodipropionate, tridecyl 3,3'-thiodipropionate, dimyristyl 3,3'-thiodipropionate, distearyl 3,3'-thiodipropionate, lauryl stearyl 3,3'-thiodipropionate, neopentanetetrayl tetrakis(3-laurylthiopropionate), and the like.

Examples of the phosphorus-based antioxidants other than the stabilizer X include the following. As the phosphorus-based antioxidant, the following compounds may be used singly, or two or more may be used in combination.

Triphenyl phosphite, tris(nonylphenyl) phosphite, tris(2,4-di-t-butylphenyl) phosphite, trilauryl phosphite, trioctadecyl phosphite, distearyl pentaerythritol diphosphite, diisodecyl pentaerythritol diphosphite, bis(2,4-di-t-butylphenyl) pentaerythritol diphosphite, bis(2,4-di-t-butyl-6-methylphenyl) pentaerythritol diphosphite, bis(2,6-di-t-butyl-4-methylphenyl) pentaerythritol diphosphite, bis(2,4,6-tri-t-butylphenyl) pentaerythritol diphosphite, tristearyl sorbitol triphosphite, tetrakis(2,4-di-t-butylphenyl)-4,4'-diphenylene diphosphonite, 2,2'-methylenebis(4,6-di-t-butylphenyl) 2-ethylhexyl phosphite, 2,2'-ethylidenebis(4,6-di-t-butylphenyl) fluorophosphite, bis(2,4-di-t-butyl-6-methylphenyl) ethyl phosphite, bis(2,4-di-t-butyl-6-methylphenyl) methyl phosphite, 2-(2,4,6-tri-t-butylphenyl)-5-ethyl-5-butyl-1,3,2-oxaphosphorinane, 2,2',2"-nitrilo[triethyl-tris(3,3',5,5'-tetra-t-butyl-1,1'-biphenyl-2,2'-diyl) phosphite, 2-tert-butyl-6-methyl-4-{3-[(2,4,8,10-tetra-tert-butyldibenzo[d,f][1,3,2]dioxaphosphepin-6-yl)oxy]propyl}phenol, and mixtures thereof, and the like.

Examples of the age resisters include quinoline-based age resisters such as polymers of 2,2,4-trimethyl-1,2-dihydroquinoline; monophenol-based age resisters such as 2,6-di-t-butyl-4-methylphenol and styrenated phenol; and bis-, tris-, and polyphenol-based age resisters such as tetrakis-[methylene-3-(3',5'-di-t-butyl-4'-hydroxyphenyl) propionate]methane. These may be used singly, or two or more may be used in combination. Among them, quinoline-based age resisters are preferred.

Examples of the light stabilizers include the following. As the light stabilizer, the following compounds may be used singly, or two or more may be used in combination.

(1) Examples of Acrylate-Based Light Stabilizers

Ethyl α-cyano-β,β-diphenyl acrylate, isooctyl α-cyano-β,β-diphenyl acrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate, and N-(β-carbomethoxy-β-cyanovinyl)-2-methylindoline, and mixtures thereof, and the like.

(2) Examples of Nickel-Based Light Stabilizers

The nickel complex of 2,2'-thiobis-[4-(1,1,3,3-tetramethylbutyl)phenol], nickel dibutyldithiocarbamate, nickel

salts of monoalkyl esters, nickel complexes of ketoximes, and mixtures thereof, and the like.

(3) Examples of Oxamide-Based Light Stabilizers

4,4'-Dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide, 2-ethoxy-5,4'-di-t-butyl-2'-ethyloxanilide, and mixtures thereof, and the like.

(5) Examples of 2-(2-Hydroxyphenyl)-1,3,5-triazine-Based Light Stabilizers

2,4,6-Tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-[2,4-dihydroxyphenyl-4,6-bis(2,4-dimethylphenyl]-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethylphenyl)-1,3,5-triazine, 2-[2-hydroxy-4-(2-hydroxy-3-octyloxypropoxy)phenyl]-4,6-bis(2,4-dimethylphenyl)-1,3,5-triazine, and mixtures thereof, and the like.

Examples of the polyamide stabilizers include copper or divalent manganese salts of iodides or phosphorus compounds, and mixtures thereof.

Examples of the auxiliary stabilizers include the benzofurans and indolines disclosed in U.S. Patent Nos. 4,325,853, 4,338,244, 5,175,312, 5,216,053, 5,252,643, and 4,316,611, DE-A-4,316,622 and 4,316,876, EP-A-589,839, and EP-A-591,102.

Among these, the stabilizer Y preferably includes at least one stabilizer selected from the group consisting of phenol-based antioxidants, sulfur-based antioxidants, and phosphorus-based antioxidants other than the stabilizer X, in view of easily improving the thermal stability and oxidation stability of organic materials.

In one embodiment of the present invention, the content of the stabilizer Y may be preferably 10 parts by mass or more, more preferably 20 parts by mass or more, and further preferably 40 parts by mass or more and preferably 200 parts by mass or less, more preferably 100 parts by mass or less, and further preferably 60 parts by mass or less per 100 parts by mass of the stabilizer X.

[Organic Material Composition]

The present invention also encompasses an organic material composition including the phosphite composition of the present invention and an organic material. The organic material composition of the present invention has excellent thermal stability and oxidation stability because the phosphite composition of the present invention included in the organic material composition of the present invention acts as a stabilizer that is excellent in evaporation resistance and can improve the thermal stability and oxidation stability of the organic material.

In the organic material composition of the present invention, the content of the phosphite composition of the present invention is preferably 0.001 parts by mass or more, more preferably 0.01 parts by mass or more, and further preferably 0.1 parts by mass or more and preferably 5 parts by mass or less, more preferably 3 parts by mass or less, and further preferably 1 part by mass or less per 100 parts by mass of the organic material composition. When the content of the phosphite composition is equal to or more than the lower limit, the action of the phosphite composition as a stabilizer tends to be enhanced, so that an organic material composition having high thermal stability and oxidation stability is easily obtained. When the content is equal to or less than the upper limit, the migration of the phosphite composition from the organic material composition is easily suppressed.

The organic material included in the organic material composition of the present invention is not particularly limited, and examples thereof include the organic materials described in the section [Stabilizer] as the organic materials that the stabilizer of the present invention can stabilize. In one embodiment of the present invention, the organic material included in the organic material composition of the present invention preferably includes a thermoplastic resin, especially a polyolefin such as polyethylene, for example, HD-PE, LD-PE, or LLDPE, and polypropylene, or an engineering plastic such as a polyamide, polyethylene terephthalate, polybutylene terephthalate, and a polycarbonate, more preferably includes a polyolefin.

The organic material composition of the present invention may further include additives as needed, in addition to the phosphite composition of the present invention and the organic material. Examples of the additives that can be included in the organic material composition include other additives described in the section [Phosphite Composition], and the stabilizer Y described in the section [Stabilizer Composition]. These additives may be used singly or in combination of two or more.

When the organic material composition of the present invention includes additives, the total content of the additives is preferably 0.001 to 30 parts by mass, more preferably 0.01 to 10 parts by mass, and further preferably 0.05

to 5 parts by mass per 100 parts by mass of the organic material.

## Examples

The present invention will be more specifically described below based on Examples and Comparative Examples, but the present invention is not limited to the following Examples.

[Measurement of Cardol Content and Methyl Cardol Content of Raw Material]

The cardol content and methyl cardol content of each of cashew oils used as raw materials in Examples and a Comparative Example were obtained by liquid chromatography analysis. The analysis conditions are as follows.

<Analysis Conditions>

Apparatus: SPD-20AV manufactured by SHIMADZU CORPORATION
Solvents for sample preparation: methanol/chloroform = 1/1
Sample concentration: 5 mg/ml
Column: Sumipax ODS a-212 6 mm x 150 mm
Column temperature: 40°C
Detection: UV 270 nm
Flow rate: 1 ml/min
Mobile phase

A liquid: 0.1% ammonium acetate aqueous solution
B liquid: 0.1% ammonium acetate methanol solution

Elution conditions:

A liquid concentration: 20% by volume → decreased at 1% by volume/min for 20 min → 0% by volume → maintained at a concentration of 0% by volume for 30 min → 20% by volume (the concentration was instantaneously changed from a concentration of 0% volume) -> maintained at 20% by volume for 15 min
20/80 -> 0/100 (20 min, gradient), 0/100 (30 min), 20/80 (15 min)

In the chromatogram obtained by the liquid chromatography analysis, the peak area value of peaks at retention times of 13.1 to 15.8 min and 16.7 to 17.4 min, which correspond to cardol, was calculated as the cardol content. Similarly, the peak area rate of peaks at retention times of 23.1 to 23.6 min and 24.7 min, which correspond to methyl cardol, was calculated as the methyl cardol content.

The raw materials used in the Examples and the Comparative Example, and the cardol contents and methyl cardol contents of the raw materials are shown in Table 1.

[Table 1]

| Example/ Comparative Example | Raw material | Cardol content/methyl cardol content (%) |
|---|---|---|
| Example 1 | Cardolite Corporation NX-2025 | 1.8/0.9 |
| Example 2 | Tohoku Chemical Industries, Ltd. LB-7250 | 3.4/1.0 |
| Example 3 | Tronto Research Chemicals Inc. C"rdanol(Mixture) | 8.3/1.3 |
| Example 4 | Tohoku Chemical Industries, Ltd. CNSL | 17.3.1.2 |
| Example 5 | Tohoku Chemical Industries, Ltd. CNSL | 17.3/1.2 |

(continued)

| Example/ Comparative Example | Raw material | Cardol content/methyl cardol content (%) |
|---|---|---|
| Comparative Example 1 | Cardolite Corporation NX-2025 (Column purification) | 0.0/0.0 |

[Measurement of Oligomer Content and Number Average Molecular Weight of Oligomer A in Phosphite Composition]

The content of each of the oligomers A (oligomer content) included in the phosphite compositions obtained in the Examples and the Comparative Example and the number average molecular weight of each of the oligomers A were obtained by GPC analysis. The analysis conditions are as follows.

<Analysis Conditions>

Apparatus: Tosoh Corporation HLC-8320GPC
Solvents for sample adjustment: THF
Sample concentration: 12.5 mg/ml
Guard column: PLgel GUARD 3 $\mu$m (Agilent)
Columns: two of PLgel 2 $\mu$m MIXED-E (Agilent)
Column temperature: 40°C
Detection: RI
Flow rate: 1 ml/min
Mobile phase: THF

In the GPC analysis, the RI area percentage of the peak corresponding to the compound A0 present within the molecular weight range of 1080 or more and less than 1820 in terms of polystyrene, and the RI area percentage of the peak corresponding to the oligomer A present within the molecular weight range of 1820 to 30,000 in terms of polystyrene were calculated, and the oligomer content was obtained by the following formula:

oligomer content = RI area percentage of oligomer A/(RI area percentage of oligomer A + RI area percentage of compound A0)

In addition, the number average molecular weight of the oligomer A in terms of polystyrene was obtained by the GPC analysis.

<Example 1: Synthesis of Composition A-1>

50.0 g (364.1 mmol) of phosphorus trichloride, 125.3 g (1237.9 mmol) of triethylamine, and 750 ml of toluene were placed in a four-necked flask, and then 322.6 g of cashew oil (Cardolite Corporation, NX-2025) was dropped under a nitrogen atmosphere at 60°C over 7 h. After the completion of the dropping, the mixture was stirred in a reflux state for 12 h. After the completion of the stirring, the reaction liquid was cooled and washed once with 150 mL of water, three times with 250 mL of a 3% sodium hydroxide aqueous solution, and twice with 500 mL of a saturated saline solution. 7.2 g of the crude product obtained by concentrating and drying the organic layer was purified by silica gel column chromatography (hexane/ethyl acetate = 95/5 -> 90/10) to obtain 3.0 g of a phosphite composition A-1.

As a result of the GPC analysis, the oligomer content of the composition A-1 was 7.7%, and the number average molecular weight of the oligomer was 2200. The oligomer included in the composition A-1 included a dimer and a trimer. $^{31}$P-NMR (THF-$d_8$, 400 MHz) of composition A-1: $\delta$130.0-131.5

<Example 2: Synthesis of Composition A-2>

30.0 g of cashew oil (Tohoku Chemical Industries, Ltd., LB-7250), 12.1 g (120.0 mmol) of triethylamine, and 75 ml of toluene were placed in a four-necked flask, and then 4.9 g (35.3 mmol) of phosphorus trichloride was dropped under a nitrogen atmosphere at 60°C over 30 min. After the completion of the dropping, the mixture was stirred in a reflux state for 5 h. After the completion of the stirring, the reaction liquid was filtered, and the filtrate was washed with 70 mL of a saturated saline solution. The crude product obtained by concentrating and drying the organic layer was

purified by silica gel column chromatography (hexane/ethyl acetate = 100/0 → 95/5) to obtain 13.4 g of a phosphite composition A-2. As a result of the GPC analysis, the oligomer content of the composition A-2 was 13.5%, and the number average molecular weight of the oligomer was 2300. The oligomer included in the composition A-2 included a dimer and a trimer.
$^{31}$P-NMR (THF-$d_8$, 400 MHz) of composition A-2: δ128.4-129.5

<Example 3: Synthesis of Composition A-3>

30.0 g of cashew oil (Tronto Research Chemicals Inc., Cardanol (Mixture)), 12.1 g (120.0 mmol) of triethylamine, and 75 ml of toluene were placed in a four-necked flask, and then 4.9 g (35.3 mmol) of phosphorus trichloride was dropped under a nitrogen atmosphere at 60°C over 30 min. After the completion of the dropping of phosphorus trichloride, the mixture was stirred in a reflux state for 5 h. After the completion of the stirring, the reaction liquid was filtered, and the filtrate was washed with 70 mL of a saturated saline solution. The crude product obtained by concentrating and drying the organic layer was purified by silica gel column chromatography (hexane/ethyl acetate = 95/5 -> 90/10) to obtain 4.5 g of a phosphite composition A-3. As a result of the GPC analysis, the oligomer content of the composition A-3 was 27.2%, and the number average molecular weight of the oligomer was 2400. The oligomer included in the composition A-3 included a dimer and a trimer.
$^{31}$P-NMR (THF-$d_8$, 400 MHz) of composition A-3: δ128.1-129.5

<Example 4: Synthesis of Composition A-4>

30.0 g of cashew oil (Tohoku Chemical Industries, Ltd., CNSL), 13.2 g (130.3 mmol) of triethylamine, and 75 ml of toluene were placed in a four-necked flask, and then 5.3 g (38.2 mmol) of phosphorus trichloride was dropped under a nitrogen atmosphere at 60°C over 30 min. After the completion of the dropping of phosphorus trichloride, the mixture was stirred in a reflux state for 5 h. After the completion of the stirring, the reaction liquid was filtered, and the filtrate was washed with 70 mL of a saturated saline solution. The crude product obtained by concentrating and drying the organic layer was purified by silica gel column chromatography (hexane/ethyl acetate = 100/0 -> 95/5) to obtain 7.4 g of a phosphite composition A-4. As a result of the GPC analysis, the oligomer content of the composition A-4 was 47.5%, and the number average molecular weight of the oligomer was 2600. The oligomer included in the composition A-4 included a dimer and a trimer.
$^{31}$P-NMR (THF-$d_8$, 400 MHz) of composition A-4: δ128.1-129.5

<Example 5: Synthesis of Composition A-5>

55.0 g of cashew oil (Tohoku Chemical Industries, Ltd., CNSL), 24.6 g (242.9 mmol) of triethylamine, and 125 ml of toluene were placed in a four-necked flask, and then 9.8 g (71.4 mmol) of phosphorus trichloride was dropped under a nitrogen atmosphere at 60°C over 30 min. After the completion of the dropping of phosphorus trichloride, the mixture was stirred in a reflux state for 5 h. After the completion of the stirring, the reaction liquid was filtered, and the filtrate was washed with 70 mL of a saturated saline solution. The crude product obtained by concentrating and drying the organic layer was purified by silica gel column chromatography (hexane/ethyl acetate = 100/0 -> 97/3) to obtain 4.7 g of a phosphite composition A-5. As a result of the GPC analysis, the oligomer content of the composition A-5 was 73.7%, and the number average molecular weight of the oligomer was 2800. The oligomer included in the composition A-5 included a dimer and a trimer.
$^{31}$P-NMR (THF-$d_8$, 400 MHz) of composition A-5: δ130.0-131.4

<Comparative Example 1: Synthesis of Composition B-1>

30.0 g of cashew oil (Cardolite Corporation, NX-2025) was purified by silica gel column chromatography using a hexane/ethyl acetate = 100/2 solvent to obtain 5.1 g of cashew oil having a cardol content of 0.0% and a methyl cardol content of 0.0%.

4.3 g of the obtained cashew oil (column-purified product of NX-2025, Cardolite Corporation), 2.3 g (16.3 mmol) of triethylamine, 0.66 g (4.8 mmol) of phosphorus trichloride, and 10 ml of toluene were placed in a four-necked flask and then stirred under a nitrogen atmosphere at 60°C for 8 h. After the completion of the stirring, the reaction liquid was filtered, and the filtrate was washed with 10 mL of a saturated saline solution, 10 mL of a 3% sodium hydroxide salt solution, and 10 mL of a saturated saline solution. The crude product obtained by concentrating and drying the organic layer was purified by silica gel column chromatography (hexane/ethyl acetate = 95/5 -> 90/10) to obtain 3.0 g of a phosphite composition B-1. As a result of the GPC analysis, the oligomer content of the composition B-1 was 0.2%, and the number average molecular weight of the oligomer was 2300. The oligomer included in the composition B-1 included

a dimer and a trimer.
$^{31}$P-NMR (THF-$d_8$, 400 MHz) of composition B-1: δ130.0-130.6

[Evaluation of YI]

0.13 ml of each of the compositions A-1 to A-5 and B-1 obtained in Examples 1 to 5 and Comparative Example 1 was added to a container made of glass ("Maruemu Screw Bottle No. 2" manufactured by SANSYO Co., LTD.), and the YI of each composition was measured using a hue meter ("CM-5" manufactured by KONICA MINOLTA, INC.). The results are shown in Table 2.

[Table 2]

| | Example 1 | Example 2 | Example 3 | Example 4 | Example 5 | Comparative Example 1 |
|---|---|---|---|---|---|---|
| Composition | A-1 | A-2 | A-3 | A-4 | A-3 | B-1 |
| Oligomer content (%) | 7.7 | 13.5 | 27.2 | 47.5 | 73.7 | 0.2 |
| YI | 0.7 | 2.4 | 4.6 | 6.8 | 10.8 | 2.5 |

[Evaluation of Evaporation Resistance (TG-DTA)]

Each of the compositions A-1 to A-5 and B-1 obtained in Examples 1 to 5 and Comparative Example 1 was heated to 30°C to 600°C at 20°C/min under a nitrogen atmosphere using a thermogravimetric differential thermal analyzer ("DTG-60H" manufactured by SHIMADZU CORPORATION), and the temperatures at which the mass loss reached 5%, 10%, and 15% were each measured. The results are shown in Table 3. A higher mass loss temperature means higher heat resistance of the composition and better evaporation resistance.

[Table 3]

| | Example 1 | Example 2 | Example 3 | Example 4 | Example 5 | Comparative Example 1 |
|---|---|---|---|---|---|---|
| Composition | A-1 | A-2 | A-3 | A-4 | A-5 | B-1 |
| Oligomer content (%) | 7.7 | 13.5 | 27.2 | 47.5 | 73.7 | 0.2 |
| Mass loss 5% | 347 | 380 | 357 | 374 | 398 | 336 |
| Mass loss 10% | 376 | 412 | 386 | 401 | 428 | 362 |
| Mass loss 15% | 393 | 430 | 404 | 419 | 448 | 379 |

<Example 6>

100 Parts by weight of LLDPE (linear low density polyethylene (melt flow rate (MFR) at a temperature of 190°C and a load of 21.18 N: 1 g/10 min) manufactured by Sumitomo Chemical Co., Ltd.), 0.05 parts by weight of calcium stearate (manufactured by Nitto Chemical Industry Co., Ltd.), 0.05 parts of a phenol-based antioxidant ("Irganox (R) 1076" manufactured by BASF SE), and 0.10 parts of the composition A-1 as a phosphorus-based antioxidant were dry-blended. The obtained mixture was kneaded under an air atmosphere under the conditions of a temperature of 190°C and a screw rotation speed of 80 rpm using a twin-screw extruder having a cylinder diameter of 32 mm (BTN-32, PLABOR) to obtain pellets 1-1. The work of kneading the obtained pellets 1-1 under an air atmosphere under the conditions of a temperature of 280°C and a screw rotation speed of 70 rpm using a single-screw extruder having a cylinder diameter of 30 mm (model VS30-28 extruder, manufactured by TANABE PLASTICS MACHINERY CO., LTD.) to obtain pellets was repeated three times to obtain pellets 1-2.

<Examples 7 to 10 and Comparative Example 2>

Pellets 2-1 to 6-1 after kneading by the twin-screw extruder, and pellets 2-2 to 6-2 after kneading by the single-screw extruder were obtained in the same manner as in Example 6 except that as the phosphorus-based antioxidant, the compositions A-2 to A-5 and B-1 (0.10 parts) were used, respectively, instead of the composition A-1.

[Evaluation of Processing Stability]

The melt flow rates of the pellets 1-1 to 6-1 (MFR1) and the melt flow rates of the pellets 1-2 to 6-2 (MFR2) at a temperature of 190°C and a load of 21.18 N were measured using a melt indexer (model L246-3537, manufactured by TECHNOL SEVEN CO., LTD.), and the MFR2/MFR1 ratios were calculated.

For LLDPE, there is a tendency that processing by heat promotes crosslinking to thereby decrease its MFR. Therefore, the fact that the MFR is less likely to decrease even if an extrusion operation is repeated indicates that the crosslinking of LLDPE is suppressed, and therefore that the processing stability of the LLDPE is high. Accordingly, a larger MFR2/MFR1 ratio indicates better processing stability of LLDPE. The processing stability was evaluated on a basis of the obtained MFR2/MFR1 ratios according to the following criteria. The results are shown in Table 4.

<Evaluation Criteria of Processing Stability (MFR2/MFR1 Ratio)>

◎ : 0.65 or more

×: less than 0.65

[Table 4]

| | Phosphorus-based antioxidant (0.1 parts) | | Processing stability | |
|---|---|---|---|---|
| | Composition | Oligomer content (%) of composition | | |
| Example 6 | A - 1 | 7.7 | 0.73 | ○ |
| Example 7 | A - 2 | 13.5 | 0.68 | ○ |
| Example 8 | A - 3 | 27.2 | 0.76 | ○ |
| Example 9 | A - 4 | 47.5 | 0.77 | ○ |
| Example 10 | A - 5 | 73.7 | 0.76 | ○ |
| Comparative Example 2 | B - 1 | 0.2 | 0.63 | × |

As shown in Tables 2 to 3, it was confirmed that the compositions A-1 to A-5 of the present invention obtained in Examples 1 to 5 were excellent in evaporation resistance, compared with the composition B-1 obtained in Comparative Example 1. Further, the compositions A-1 to A-5 also had a low YI and therefore a good hue.

In addition, as shown in Table 4, the pellets including the compositions A-1 to A-5 of the present invention had a large MFR2/MFR1 ratio and therefore good processing stability, compared with the pellets including the composition B-1.

Thus, the phosphite composition of the present invention is useful as a stabilizer for organic materials.

## Claims

**1.** A phosphite composition comprising:

a phosphite compound A0 represented by formula (1):

[Formula 1]

(1)

wherein

$R_1$ each independently represents a $-C_{15}H_{25-31}$ group,
$R_2$ each independently represents a hydrogen atom or a hydroxyl group, and
$R_3$ each independently represents a hydrogen atom or a methyl group; and
an oligomer A derived from the compound A0, wherein
the oligomer A comprises a structure represented by formula (2):

[Formula 2]

(2)

wherein

$R_1$ each independently represents a $-C_{15}H_{25-31}$ group,
$R_2$ each independently represents a hydrogen atom or a hydroxyl group,
$R_3$ each independently represents a hydrogen atom or a methyl group, and
* represents a bond,
a number average molecular weight of the oligomer A is 1,900 to 30,000, and
the phosphite composition has a content of the oligomer A of 1% or more.

**2.** The phosphite composition according to claim 1, wherein the oligomer A comprises a compound represented by formula (3):

[Formula 3]

(3)

wherein

$R_1$ each independently represents a $-C_{15}H_{25-31}$ group,
$R_2$ each independently represents a hydrogen atom or a hydroxyl group, and
$R_3$ each independently represents a hydrogen atom or a methyl group.

**3.** The phosphite composition according to claim 1 or 2, wherein the oligomer A comprises a compound represented by formula (4):

[Formula 4]

(4)

wherein

$R_1$ each independently represents a $-C_{15}H_{25-31}$ group,
$R_2$ each independently represents a hydrogen atom or a hydroxyl group, and
$R_3$ each independently represents a hydrogen atom or a methyl group.

**4.** The phosphite composition according to any one of claims 1 to 3, wherein the content of the oligomer A is 70% or less.

**5.** The phosphite composition according to any one of claims 1 to 4, wherein the compound AC and the oligomer A are derived from a cashew oil extract.

**6.** A stabilizer comprising the phosphite composition according to any one of claims 1 to 5.

**7.** A stabilizer composition comprising the stabilizer according to claim 6 and a stabilizer other than the stabilizer according to claim 6.

**8.** The stabilizer composition according to claim 7, wherein the stabilizer other than the stabilizer according to claim 6 comprises at least one stabilizer selected from the group consisting of phenol-based antioxidants, sulfur-based antioxidants, and phosphorus-based antioxidants other than the stabilizer according to claim 6.

**9.** An organic material composition comprising the phosphite composition according to any one of claims 1 to 5 and an organic material.

**10.** The organic material composition according to claim 9, wherein the organic material comprises a polyolefin.

**INTERNATIONAL SEARCH REPORT**

International application No. **PCT/JP2022/020831**

**A. CLASSIFICATION OF SUBJECT MATTER**

***C08L 101/00***(2006.01)i; ***C07F 9/145***(2006.01)i; ***C08K 5/526***(2006.01)i; ***C08L 23/00***(2006.01)i; ***C09K 15/32***(2006.01)i
FI: C08L101/00; C09K15/32 C; C08K5/526; C08L23/00; C07F9/145

According to International Patent Classification (IPC) or to both national classification and IPC

**B. FIELDS SEARCHED**

Minimum documentation searched (classification system followed by classification symbols)

C08L101/00; C07F9/145; C08K5/526; C08L23/00; C09K15/32

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 102718796 A (NANXIONG ZHIYI FINE CHEMICAL CO., LTD.) 10 October 2012 (2012-10-10)<br>claims, examples 1, 2 | 1-10 |
| X | CN 107383088 A (RUGAO YUHUI ADDITIVES PLANT) 24 November 2017 (2017-11-24)<br>claims, examples, paragraph [0050] | 1-10 |
| A | JP 2008-537949 A (COGNIS IP MANAGEMENT GMBH) 02 October 2008 (2008-10-02)<br>paragraph [0005] | 1-10 |
| L | カシュー液体製品カタログ, 東北化工株式会社, [online][retrieved on 22 July 2022], internet <URL:tci-web.co.jp/commmon/download/catalog_liquid.pdf>, CNSLの特性値、LB-7000の特性値、LB-7250の特性値の表 non-official translation ( Cashew liquid product catalog. Tohoku Chemical Industries, Ltd.)<br>CNSLの特性値、LB-7000の特性値、LB-7250の特性値の表 (Table of CNSL characteristic figures, LB-7000 characteristic figures, LB-7250 characteristic fitures) | 1-10 |
| L | Cardolite Corp. website, [online], [retrieved on 22 July 2022], internet:<URL:cardolite.com/products/building-blocks/>, table Cardanol Grades and Properties, Typical Purity)<br>table of Cardanol Grades and Properties, Typical Purity | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 July 2022** | **02 August 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/020831**

| Patent document cited in search report | Publication date (day/month/year) | Patent family member(s) | Publication date (day/month/year) |
|---|---|---|---|
| CN 102718796 A | 10 October 2012 | (Family: none) | |
| CN 107383088 A | 24 November 2017 | (Family: none) | |
| JP 2008-537949 A | 02 October 2008 | US 2009/0082598 A1<br>paragraph [0009]<br>WO 2006/108546 A1<br>EP 1871733 A1<br>DE 102005017125 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021091430 A
- CN 108586522 A
- CN 102718796 A
- JP 6329830 A
- JP 7278164 A
- US 4325853 A
- US 4338244 A
- US 5175312 A
- US 5216053 A
- US 5252643 A
- US 4316611 A
- DE 4316622 A
- DE 4316876 A
- EP 589839 A
- EP 591102 A